# EUROPEAN PATENT APPLICATION

(11) **EP 0 691 194 A1**
(43) Date of publication of application: **10.01.1996**
(21) Application number: 94870114.9
(22) Date of filing: 04.07.1994
(51) Int. Cl.: B29C 67/00, G09B 23/26

(54) **Three-dimensional molecular model obtained by rapid prototyping**

(71) Applicant: PHAROS S.A., B-4102 Seraing (BE)
(72) Inventor: Renard, André, B-4031 Angleur (BE); Dormal, Thierry, B-4530 Villers le Bouillet (BE); Czajkowski, Vincent, B-4317 Aineffe (BE)
(74) Representative: Van Malderen, Michel

(57) **Abstract**

The present invention relates to a product obtained by rapid prototyping, constituted by a three-dimensional molecular representation of at least one organic or inorganic molecule and/or of a fragment of the said molecule in the form of a polymeric mass, preferably made of a continuous, pyrolysable resin or of contiguous wooden strips.

## Description

### Subject of the invention.

The present invention relates to product obtained by rapid prototyping which is constituted by a three-dimensional molecular representation of at least one molecule and/or of a fragment of the said molecule.

### Technological background to the basis of the invention.

In order to visualize the active sites, and to understand the mechanisms by which a complex molecule acts, especially a complex macromolecule such as a protein, a three-dimensional structure of the molecule is represented by joining together simple subunits (representing atoms or bonds between atoms) prefabricated from plastic and/or from wood.

However, such a construction is difficult and lengthy to realize physically, in particular for biological molecules (proteins, nucleic acids, etc.) where the number of atoms is very great.

In fact, the construction of these large-sized represent ations requires the manual participation of several qualified persons for long periods of time (in some cases, several months), which considerably increases the installation cost and the risks of errors in the assembly.

What is more, it is also often necessary to design a support made of metal (or of another component) in order to hold the said structure.

Furthermore, these fragile and excessively large-sized representations cannot be easily moved and/or manipulated by researchers, nor reproduced in high volume.

For several years, computer developments have made it possible to visualize, on a computer screen, the three-dimensional structure of molecules (especially biological molecules) defined by data obtained, for example, by X-ray crystallography. This technique makes it possible, especially, to visualize the various conformations which a molecule may adopt (the dynamics of the molecule).

However, this technique does not allow tactile contact with the object represented and requires the user to be trained in the handling of the computer and the software, as well as requiring a sophisticated and expensive workstation.

Furthermore, on a flat screen, it is difficult for the human eye to visualize clearly the three-dimensional structure of the said molecule and to discover all the details thereof.

What is more, in the fields of research, advertising and marketing, a need exists to obtain an easily manipulatable object which is either the chosen representation of a three-dimensional molecule, the coordinates of which are known, or the chosen representation of one of the possible configurations of the said molecule.

### State of the art.

Rapid prototyping is a method of manufacturing three-dimensional objects obtained, for example, by polymerization of a liquid resin.

The local polymerization of a liquid resin is triggered by a beam of radiation, the position of which, within a liquid mass, is automatically controlled on the basis of data which define the contour of the object to be constructed and the realization of which results either from photographic or telemetric measurements, or automatically by employing the technique of computer-aided design (CAD).

The method of rapid prototyping may especially produce a polymerized product (prototype) consisting of polymerized successive layers according to level-curves growing in a discontinuous way (Patent Application FR-89/15031) or in a continuous way (Patent FR-2,678,206).

The source of radiation may, for example, consist of a UV laser (Patent Application WO-89/09687).

The technique of rapid prototyping is used in the motor-vehicle, aerospace, computing and electronic industries in order to obtain "semi-finished" products such as mock-ups of industrial objects or of simple decorative objects. These mock-ups may, for example, be used in aerodynamic or photoelastic tests and subsequently serve as moulds for the high-volume production of industrial or decorative "finished" products.

The "semi-finished" objects obtained by this technique have a simple structure, since it is subsequently difficult to produce complex "finished" objects in high volume by moulding.

In the medical field, one of the applications of this technique is the production of a three-dimensional representation of the human acoustic duct (Ghezal et al. (Informatik Forschung und Entwicklung) Vol. 7, No. 3, pages 121-125 (1992)).

### Aims of the invention.

The present invention seeks to obtain a product which is the three dimensional molecular representation of at least one molecule and/or of a fragment of a molecule, such as a protein, in particular a product which can be easily manipulated by a researcher.

The object of the present invention is also to obtain a small-sized product which does not require support to hold it.

Another object of the invention is to be able to provide an unlimited choise of products which are the representation either of various molecules or of the various possible conformations of the said molecules.

A supplementary object of the present invention is to obtain a product, the rapid and inexpensive design of which enables it to be produced in high volume.

### Characteristic elements of the invention.

The present invention relates to a product obtained by rapid prototyping, constituted by a three-dimensional molecular representation of at least one molecule (either organic or inorganic) and/or of a fragment of the said molecule in the form of a polymeric mass, preferably made of a continuous pyrolysable resin or of contiguous wooden strips.

By "product constituted by a three-dimensional molecular representation" is meant a solid structure in three dimensions, which is the molecular representation of a molecule (either organic or inorganic) and/or of a fragment of the said molecule.

By rapid prototyping is meant a method enabling the three-dimensional representation of an object (prototype) to be obtained directly on the basis of computer data, without any machining. Preferably, the rapid prototyping method used in the present invention is stereolithography.

The product thus obtained by rapid prototyping may constitute the "finished" product of the invention. It may be easily manipulated by a researcher or be used in the advertising field for promotional purposes.

According to the invention, the said molecule represented is a complex organic or inorganic macromolecule, preferably a polymer or a crystal, consisting of a large number of atoms.

By polymer is meant a molecule characterized by the repeating of one or more atoms or groups of atoms bonded to each other.

According to a preferred embodiment of the invention, the polymer represented is a biological molecule chosen from the group consisting of the proteins, the nucleic acids, the polysaccharides, the lipids and/or a mixture thereof.

Advantageously, the said product is the three-dimensional representation of a computer-aided design obtained on the basis of theoretical or experimental data on the spatial arrangement of the said molecule.

Preferably, the said data on the spatial arrangement of the molecule are obtained by X-ray crystallography, by nuclear magnetic resonance and/or by the molecular modelling of the said molecule.

According to the invention, it is possible to adapt these data and to obtain several different products of the same molecule, each representing one different spatial conformation of the molecule. These conformations illustrate the dynamics of the said molecule (interactions existing between the atoms of the same molecule or with atoms of other molecules).

Likewise, it is possible to use certain specific designs (spheres or cylinders, which are solid or hollow, reticulated, punctuated, etc.) in order to identify certain atoms and/or groups of atoms.

Another aspect of the invention relates to the mould of the three-dimensional molecular product obtained by rapid prototyping, consisting of a continuous polymeric and/or metallic mass.

### Brief description of the drawings.

The figure 1 is a schematic representation of the producing cycle of the product according to the invention.

The figures 2 to 4 are photographic views of the product according to the invention.

### Description of a preferred embodiment of the invention.

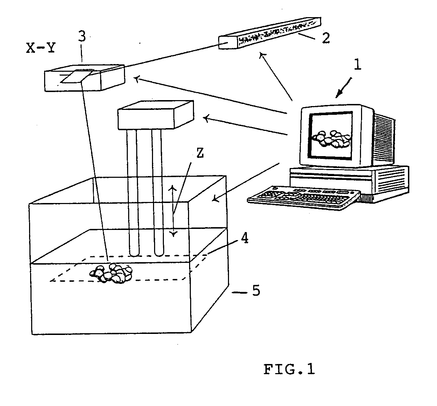

The cycle for producing the three-dimensional molecular product according to the invention is described in Figure 1 and is executed in several steps:

### 1. Design of the computer-aided design model.

A (3D) software package designs the most stable representation 1 of an X-ray crystallographic examination of a molecule.

The molecule is defined for each atom by the coordinates x, y and z of its centre, and by its radius.

For each atom, spheres of a radius depending on the type of atom and on its environment are represented.

It is therefore possible, for example, not to represent the hydrogen atoms in the said molecule.

### 2. Extracting and reformatting of the PDB data files.

The PDB, standing for Protein Database of Brookhaven, is a public worldwide database built up with data coding for the 3D protein structures deduced from either X-RAY crystallography studies or NMR modelling.

Onto a PC 80486-DX running with MS-DOS 6.2, the following computer process has been developed :
1) Telephone line connection between the PDB public computer located at Brookhaven and a 80486-DX PC located at Liège, and transfer of the remote PDB data file by a modem protocol.
2) Conversion and importation of PDB data file into a PC Paradox 3.5 (MS-DOS version) data file format.
3) Extracting, with specific Paradox 3.5 SQL queries, of x, y, z and r, coding respectively for the spatial coordinates (x, y and z) and the Van Der Vaals radius (r) of each atom of the protein.
4) Reformatting and output the x, y z and r data into a standard ASCII flat file.

The first molecule data coordinates designated by this process has been one of the two monomers of the triosephosphate Isomerase of *Tripanosoma brucei* (E.C.5.3.1.1). The PDB access number of that protein is 5TIM.

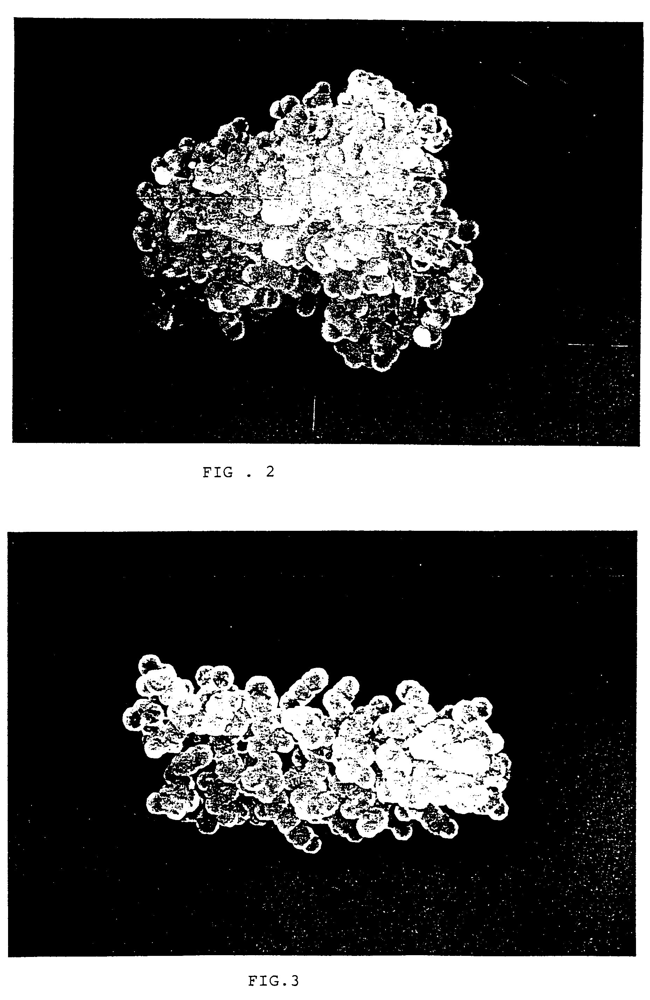

The product obtained is represented in the figure 2.

For each atom, a facetted 3D sphere is designed in a STL format used in the rapid prototyping method.

The View 1.5® software package from 3D-Systems is used for visualizing and orienting the representation in 3D space. This representation is subsequently inspected by the Verify® 3D software.

The software package is adapted in order:
- to modify the facetting of the spheres, so that certain faces of the said spheres offer a sufficient base to the specific supports holding the spheres, this adaptation influencing the finish of the surfaces, the preprocessing speed and the size of the files, which may quickly reach several tens of megabytes;
- to create a different representation of certain (hydrophilic/hydrophobic) atoms as regards the surface appearance by varying the geometry without excessively increasing the size of the files;
- to create a generation of geometries which are more economical in terms of resin and/or in terms of laser (polymerization) time, hollow spheres being able, for example, to be envisaged when the diameter exceeds 10 mm.

### 3. Preparation of the data.

Another software package (Slice release 1.5®, also from 3D-Systems) processes the computer-aided design file, cuts up the three-dimensional (3D) volume into two-dimensional (2D) slices which a laser beam traces at the surface of a liquid acrylic resin, and this is done for each horizontal layer (from 65 to 700 microns in thickness, depending on the accuracy required).

Another STL file is created in order to generate a support with the BridgeWorks 3.0® software package.

### 4. Creation of the product.

The stereolithographic device used is the SLA-250® from 3D-Systems, and the liquid acrylic resin polymerizable by the He-Cd laser is supplied by Ciba (Cibatool XB 5149®).

The product is obtained from lower slices and rests on a vertically movable immersed plate. The laser beam 2 traces, via oscillating mirrors 3, lines on the surface of the resin. This (He-Cd) low-power UV laser ray thus causes instantaneous curing of the section. When the scanning has been carried out on a slice (X-Y), the plate 4 which supports the object is pushed into the tank 5 of monomer by an amount (Z) equal to the thickness polymerized by the laser. After a certain dwell time, due to the viscosity of the resin, the laser 2 carries out the scanning of the next layer.

### 5. Postpolymerization and finishing.

At the end of this procedure, the product constructed is polymerized to approximately 98%. The liquid-resin residues are subsequently removed using isopropanol or with tripropylene glycol monomethyl ether (TPM), the supports are detached, and then the article is placed in an oven provided with UV tubes in order to completely solidify it.

Preferably, the size of the product is less than 25 or 50 cm a side, but nothing prevents larger articles from being produced by joining together. The overall accuracy of the system is 0.1 mm and the manufacturing time is from 2 hours for a small product of a few cm³ to 20 or 30 hours for more voluminous products.

Advantageously, the resin used consists of acrylic monomers and oligomers added to a photoinitiator. The latter absorbs the light energy at 325 nanometers and is decomposed into free radicals making it possible to produce the polymerization chain reaction. This absorption takes place at the surface, which facilitates heat exchange. The average shrinkage of this resin is 0.8%, but various possibilities for correction exist.

In addition, a lower viscosity provides several advantages. It accelerates the procedure by decreasing the dwell time between the layers drawn by the laser. It facilitates the cleaning of the product before post-polymerization and the flow of resin out of narrow cavities. Better tolerances may also stem from a low viscosity, since the surface tensions are less at the edges of the product.

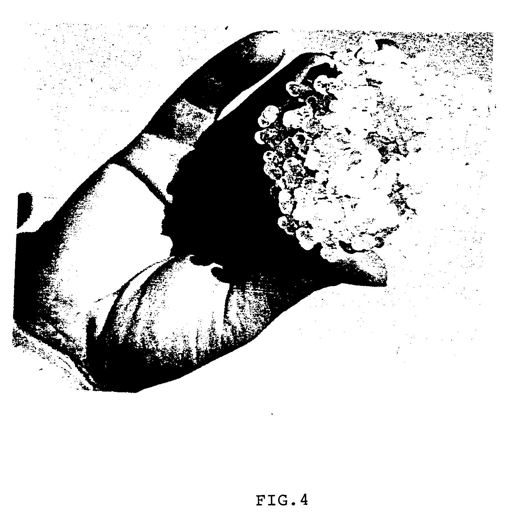

The three-dimensional molecular product thus obtained may constitute the "finished" product of the invention (figures 2 to 4). It may be easily manipulated by a researcher or be used in the advertising field for promotional purposes.

However, silicone moulds of this product may also be envisaged for simple molecules and may provide polyurethane articles of any colour.

Furthermore, foundry techniques may give good results, even for complex cases, by using one-piece casting or permanent-die casting. The products obtained would then, for example, be made of aluminium.

Furthermore, depending on the type of molecule represented (size, complexity, material, etc.), other rapid prototyping techniques may also be used to produce the product according to the invention.

It is thus possible to use the (Stratasys) molten-deposition modelling technique in which a thermoplastic filament is deposited for each section to be produced at a temperature just below the melting point. This method is more rapid than stereolithography and uses relatively cheap materials (wax, nylon, polyethylene). However, this technique has the drawback of lacking sensitivity in the production of small details.

It is also possible to produce the product according to the invention using the UV flashing technique in which, in the stereolithographic method, the laser is replaced by a UV flash which solidifies, in a fraction of a second, a thin layer of polymer through a mask. The non-cured resin is recovered and replaced by wax, which eliminates the necessity of designing supports in the computer-aided design step.

Another technique which can be used is the application of the SLS® (Selective Laser Sintering from DTM) device in which the liquid polymer is replaced by a mixture of plastic powders which a CO₂ laser beam agglomerates by local melting. In this technique, it is possible to use polycarbonate, nylon and/or wax. Compared to the photopolymers, a greater diversity of materials is available with theoretically superior mechanical properties. However, although the accuracy obtained is almost as good as with stereolithography, the resolution is poorer, and it is virtually impossible to produce small details below 0.5 mm.

## Claims

1. Product obtained by rapid prototyping, characterized in that it is constituted by a three-dimensional molecular representation of at least one organic or inorganic molecule and/or of a fragment of the said molecule in the form of a polymeric mass, preferably made of a continuous, pyrolysable resin or of contiguous wooden strips.

2. Product according to Claim 1, characterized in that the molecule is a polymer.

3. Product according to Claim 2, characterized in that the polymer is a biological molecule chosen from the group consisting of the proteins, the nucleic acids, the polysaccharides, the lipids and/or a mixture thereof.

4. Product according to Claim 1, characterized in that the molecule is a crystal.

5. Product according to any one of the preceding claims, characterized in that it is the three-dimensional representation of a computer-aided design obtained on the basis of theoretical or experimental data on the spatial arrangement of the said molecule.

6. Product according to Claim 5, characterized in that the data on the spatial arrangement of the molecule are obtained by X-ray crystallography, by nuclear magnetic resonance and/or by the molecular modelling of the said molecule.

7. Product according to any one of the preceding claims, characterized in that it is obtained by stereolithography.

8. Mould of the product according to any one of the preceding Claims 1 to 7, characterized in that it consists of a continuous polymeric and/or metallic mass.
